(19) Europäisches Patentamt / European Patent Office / Office européen des brevets

(11) EP 3 149 102 B1

(12) **EUROPEAN PATENT SPECIFICATION**

(45) Date of publication and mention of the grant of the patent:
**29.08.2018 Bulletin 2018/35**

(21) Application number: **15726844.2**

(22) Date of filing: **21.05.2015**

(51) Int Cl.:
***C09K 8/528*** *(2006.01)*

(86) International application number:
**PCT/US2015/031886**

(87) International publication number:
**WO 2015/183675 (03.12.2015 Gazette 2015/48)**

(54) **THERMALLY STABLE POLYMERIC SCALE INHIBITOR COMPOSITIONS**

THERMISCH STABILE POLYMERE KESSELSTEINHEMMUNGSZUSAMMENSETZUNGEN

COMPOSITIONS POLYMÈRES, THERMIQUEMENT STABLES, INHIBITRICES DE DÉPÔTS

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **29.05.2014 US 201462004465 P**

(43) Date of publication of application:
**05.04.2017 Bulletin 2017/14**

(73) Proprietor: **Dow Global Technologies LLC**
**Midland, MI 48674 (US)**

(72) Inventor: **PADILLA-ACEVEDO, Angela I.**
**Freeport, TX 77541 (US)**

(74) Representative: **Murgitroyd & Company**
**Scotland House**
**165-169 Scotland Street**
**Glasgow G5 8PL (GB)**

(56) References cited:
**WO-A1-2005/012193**
**US-A- 4 029 577**
**US-A- 4 566 973**
**US-A- 4 575 425**
**US-A- 4 711 725**

- **FARRELL L SIEGA ET AL: "Calcite Scale Inhibition: The Case of Mahanagdong Wells in Leyte Geothermal Production Field, Philippines", PROCEEDINGS WORLD GEOTHERMAL CONGRESS 2005, 1 January 2005 (2005-01-01), pages 1-6, XP55203444,**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 3 149 102 B1

Printed by Jouve, 75001 PARIS (FR)

## Description

### FIELD OF THE INVENTION

The present invention relates to thermally stable polymeric scale inhibitor compositions, and use thereof. The polymeric scale inhibitor compositions of the present invention are particularly suitable for high pressure/high temperature applications.

### BACKGROUND OF THE INVENTION

Scale inhibiting polymers are often used in water treatment and oil field applications to minimize and/or prevent scale deposition. The deposition of scale can occur in the transport of aqueous mixtures and in subterranean rock formations due to the presence of water bearing alkaline earth metal cations such as calcium, barium, strontium and the like as well as the presence of anions such as phosphate, sulfates, carbonates, silicates and the like. When these ions are in sufficient concentrations, a precipitate can form that builds up on interior surfaces of the conduits used for transport or in the subterranean rock formations, which restrict flow of the media of interest, e.g., water or oil.

In oilfield applications, scales that are commonly formed include calcium sulfate, barium sulfate, and/or calcium carbonate scales that are generally formed in the fresh waters or brines used in well stimulation as a result of increased concentrations of these particular ions, the water pH, pressures, and temperatures. In addition, calcium phosphate can form in the presence of phosphates commonly used to treat wells and pipes for corrosion. The buildup of these mineral precipitates can reduce or block flow in the conduits and rock formations as well as cause other problems. In many cases, the first warning of the existence of a significant scale deposit may be a decline in well performance. In these instances, scale removal techniques may become necessary. As a result, a potentially substantial cost including downtime is required to affect repair as a result of scaling.

Scale inhibiting materials are commonly applied to rock formations by means of a squeeze treatment prior to production. In these applications, a relatively concentrated form of the scale inhibitor is added. Using the method, the scale inhibitor is pumped into a water-producing zone and attaches to the formation by chemical adsorption or by temperature-activated precipitation. When the well is put back into production, the scale inhibitor leaches out of the formation rock to provide scale inhibition.

Capillary injection is another method for delivering scale inhibiting materials. In capillary injection, a relatively concentrated form of the scale inhibitor composition is continuously pumped into the well during production.

Due to changing patterns of energy usage and availability, exploration and production is occurring at increasing depths. As a result, the chemicals used to enhance oil and gas production are subjected to increasing temperatures (i.e., 150°C to 230°C) and pressures (i.e., 172 to 207 MPa (25,000 to 30,000 psi)), which are generally known to both increase as a function of well depth. Many of the compositions commonly used as scale inhibitors have an acidic pH and are unstable under high temperature and pressure conditions. Under such conditions, these compositions degrade and do not perform their desired function as a scale inhibitor.

There is a need for a scale inhibitor composition having good thermal stability useful for high pressure/high temperature applications.

### BRIEF SUMMARY OF THE INVENTION

The present invention is a method for scale inhibition treatment of an oil and gas production well or subterranean formation comprising introducing an aqueous scale inhibiting composition into the oil and gas production well or subterranean formation wherein the aqueous scale inhibiting composition comprises: i) a polycarboxylic acid (co)polymer not containing a sulfuric acid group and/or sulfonate group, wherein the polycarboxylic acid (co)polymer is a homopolymer of maleic acid, said polycarboxylic acid (co)polymer preferably having a weight average molecular weight of from 900 to 1,000 daltons and ii) one or more base such that the pH of the aqueous scale inhibiting composition is equal to or greater than 5 and equal to

or less than 10, preferably the base selected from an inorganic base, an amine, an ammonium compound, a sterically hindered secondary aminoether alcohol, a phosphate compound, or a borate compound, preferably a piperazine or derivative thereof, piperidine or derivative thereof, imidazole or derivative thereof, or a borate or derivative thereof, potassium hydroxide, lithium hydroxide, or sodium hydroxide.

In one embodiment of the present method disclosed herein above, the aqueous scale inhibiting composition is introduced by a squeeze treatment.

In another embodiment of the present method disclosed herein above, the aqueous scale inhibiting composition is introduced by a capillary injection treatment. Farrell L. Siega et.al. ("Calcite Scale Inhibition: The case of Mahanagdong wells in Leyte geothermal production field, Philippines", Proceedings World Geothermal Congress 2005, 01.January

2005, XP55203444) discloses the calcite scale blockage in the wellbore of a production well by applying compositions with either polyacrylic acid or polymaleic anhydride.

DETAILED DESCRIPTION OF THE INVENTION

The scale inhibitor composition according to the present invention comprises an aqueous solution of polycarboxylic acid homopolymer. Polycarboxylic acid (co)polymers and methods to polymerize them are well known; see USP 5,294,686 and USP 6,001,940. Any suitable polymerization method can be used to prepare the polycarboxylic acid (co)polymers of the present invention, such as free-radical polymerization method, aqueous bulk/dispersion polymerization, solution polymerization, or emulsion polymerization.

The (co)polymerization of the (co)monomers can be carried out in the presence of polymerization initiators including, without limitation, ammonium persulfate, sodium persulfate, potassium persulfate, azo initiators, azobisisobutyronitrile (AIBN), organic or inorganic peroxides, cerium ammonium nitrate, perchlorates, and the like. The polymerization initiators are generally in an amount of about 0.01 to about 10 weight percent based on the total weight of the monomers as is appreciated by those skilled in the art.

As used herein after, the term "(co)polymer" or "(co)polymerization" means a homo polymer and/or a copolymer. In some instances, a copolymer has only two comonomers, in other cases a copolymer may have two or more comonomers. Polycarboxylic acid (co)polymers result from the (co)polymerization of one or more monomers wherein at least 20 percent by weight of the one or more monomers are monoethylenically unsaturated acids and/or anhydrides. Monoethylenically unsaturated acids can be mono-acids, di-acids or polyacids and the acids may be carboxylic acids, phosphonic acids, salts or combinations thereof. Monoethylenically unsaturated acids are, for example, acrylic acid, methacrylic acid, crotonic acid, vinylacetic acid, acid and the alkali metal and ammonium salts thereof. Monoethylenically unsaturated dicarboxylic acids and the anhydrides of the cis-dicarboxylic acids are, for example, maleic acid, maleic anhydride, 1,2,3,6-tetrahydrophthalic anhydride, 3,6-epoxy-1,2,3,6-tetrahydrophthalic anhydride, 5-norbornene-2,3-dicarboxylic anhydride, bicyclo[2.2.2]-5-octene-2,3-dicarboxylic anhydride, 3-methyl-1,2,6-tetrahydrophthalic anhydride, 2-methyl-1,3,6-tetrahydrophthalic anhydride, itaconic acid, mesaconic acid, fumaric acid, citraconic acid and the alkali metal and ammonium salts thereof. Other monoethylenically unsaturated acids include allylphosphonic acid, isopropenylphosphonic acid, vinylphosphonic acid, and the alkali metal and ammonium salts thereof. One or more monoethylenically unsaturated carboxylic acids disclose herein are acrylic acid and methacrylic acid. The monoethylenically unsaturated dicarboxylic acid is maleic acid. The polycarboxylic acid polymer is a homopolymer of maleic acid.

Homopolymers disclosed herein include homopolymers of maleic acid, homopolymers of acrylic acid, and homopolymers of methacrylic acid. Copolymers disclosed herein include copolymers of acrylic acid and maleic acid, copolymers of acrylic acid and methacrylic acid, copolymers of maleic acid and methacrylic acid, wherein the copolymers herein above may consist of only the two monomers described or comprise the two monomers described and one or more additional monomers.

Polycarboxylic acid copolymers disclosed herein may comprise one or more monoethylenically unsaturated acid monomer copolymerized with one or more monoethylenically unsaturated acid-free monomers as long as the acid-free comonomer does not contain a sulfonate group or a sulfonic acid group. The polycarboxylic acid (co)polymer of the present invention does not contain a sulfonate group or a sulfonic acid group.

Monoethylenically unsaturated acid-free monomers disclosed herein include $C_1$ to $C_4$ alkyl esters of acrylic or methacrylic acids such as methyl acrylate, ethyl acrylate, butyl acrylate, methyl methacrylate, ethyl methacrylate, butyl methacrylate and isobutyl methacrylate; hydroxyalkyl esters of acrylic or methacrylic acids such as hydroxyethyl acrylate, hydroxypropyl acrylate, hydroxyethyl methacrylate, and hydroxypropyl methacrylate. Other monoethylenically unsaturated acid-free monomers are acrylamides and alkyl-substituted acrylamides including acrylamide, methacrylamide, N-tertiarybutylacrylamide, N-methylacrylamide, and N,N-dimethylacrylamide. Other monoethylenically unsaturated acid-free monomers include acrylonitrile, methacrylonitrile, allyl alcohol, phosphoethyl methacrylate, 2-vinylpyridine, 4-vinylpyridine, N-vinylpyrrolidone, N-vinylformamide, N-vinylimidazole, vinyl acetate, and styrene.

Copolymers disclosed herein are a copolymer of maleic acid and vinyl acetate, a copolymer of acrylic acid and vinyl acetate, a copolymer of acrylic acid and N-tertiarybutylacrylamide, a copolymer of methacrylic acid and vinyl acetate, a copolymer of methacrylic acid and N-tertiarybutylacrylamide, wherein the copolymers herein above may consist of only the two monomers described or comprise the two monomers described and one or more additional monomers.

The aqueous solution of the present invention comprises from 1 weight percent to 50 weight percent polycarboxylate (co)polymer based on the total weight of the aqueous solution. Preferably, the polycarboxylic acid (co)polymer is present in the aqueous solution of the present invention in an amount equal to or greater than 1 weight percent, more preferably equal to or greater than 5 weight percent, and even more preferably equal to or greater than 10 weight percent based on the total weight of the aqueous solution. Preferably, the polycarboxylic acid (co)polymer is present in the aqueous solution of the present invention in an amount equal to or less than 60 weight percent, more preferably equal to or less than 50 weight percent, and even more preferably equal to or less than 20 weight percent based on the total

weight of the aqueous solution.

Preferably the polycarboxylic acid (co)polymer is a low molecular weight polymer having a weight average molecular weight equal to or less than 50,000. Preferably, the weight average molecular weight of the polycarboxylic acid (co)polymer is equal to or greater than 500 daltons, more preferably equal to or greater than 800 daltons, and even more preferably equal to or greater than 1000 daltons. Preferably, the weight average molecular weight of the polycarboxylic acid (co)polymer is equal to or less than 50,000 daltons weight percent, more preferably equal to or less than 20,00 daltons, and even more preferably equal to or less than 10,000 daltons.

The scale inhibitor composition of the present invention further comprises a suitable amount of base to neutralize the aqueous solution comprising the polycarboxylic acid (co)polymer to a pH of from 5 to 10. The pH of the scale inhibitor composition of the present invention is equal to or greater than 5, more preferably equal to or greater than 6. The pH of the scale inhibitor composition of the present invention is equal to or less than 10, more preferably equal to or less than 9, more preferably equal to or less than 8, even more preferably equal to or less than 7.

One skilled in the art can easily determine the amount of the specific base selected to neutralize the specific polycarboxylic acid (co)polymer by to a desired pH. The choice of base and/or amount may be limited if the polymer starts to precipitate out as the base is being added.

Any base that will neutralize the polycarboxylic acid polymer is suitable for use in the present aqueous scale inhibitor compositions. For example, bases such include, but are not limited to, include inorganic bases, amines, including ammonium compound and sterically hindered secondary aminoether alcohols, phosphate compounds, borate compounds, and the like.

Examples of inorganic bases include potassium hydroxide, sodium hydroxide, or lithium hydroxide.

Useful ammonium compound are ammonium hydroxide and tetraalkyl ammonium hydroxides such as tetramethyl ammonium hydroxide and tetrabutyl ammonium hydroxide.

Suitable sterically hindered secondary aminoether alcohols are disclosed in USP 4,758,367. The sterically hindered secondary aminoether alcohols may have either acyclic or cyclic moieties attached to the nitrogen atom(s) of the aminoether alcohols. By the term "sterically hindered" it is meant that the nitrogen atom of the amino moiety is attached to one or more bulky carbon groupings. Examples of sterically hindered secondary aminoethyl alcohols useful for use in the aqueous scale inhibitor compositions of the present invention include: 2-methyl-2-amino propane-1,3-diol (AMPD), 2-ethyl-2-amino propane 1,3-diol (AEPD), 2-methyl-2-amino propanol (AMP), 2-hydroxy methyl-2-amino-1,3-diol (Tris-amino), 2-methyl-2-N,N-dimethyl amino propanol (DMAP).

Any primary, secondary, or tertiary amine capable of neutralizing the polycarboxylic acid polymer of the present invention is suitable. Particularly suitable amines are imidazole, morpholine, piperazine and substituted piperazines, or piperidine and N-substituted piperidines.

Suitable piperazine derivatives are represented by the following formula:

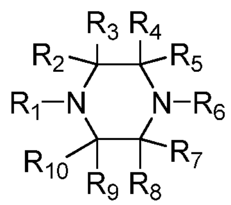

wherein $R_1$ and $R_6$ are independently H, alkyl, hydroxyalkyl, or aminoalkyl
and

$R_2$, $R_3$, $R_4$, $R_5$, $R_7$, $R_8$, $R_9$ and $R_{10}$ are independently H, alkyl including branched or linear $C_1$ to $C_{20}$, preferably methyl, ethyl, propyl, or isopropyl, hydroxyalkyl, or aminoalkyl.

Suitable piperidine derivatives are represented by the following formula:

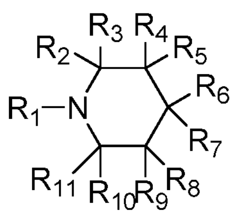

wherein $R_1$ is H, alkyl, hydroxyalkyl, or aminoalkyl
and

$R_2$, $R_3$, $R_4$, $R_5$, $R_7$, $R_8$, $R_9$, $R_{10}$ and $R_{11}$ are independently H, alkyl including branched or linear $C_1$ to $C_{20}$, preferably methyl, ethyl, propyl, or isopropyl, hydroxyalkyl or aminoalkyl.

Suitable imidazole derivatives are represented by the following formula:

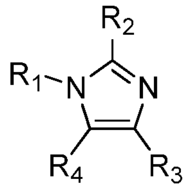

wherein $R_1$ is H, alkyl, hydroxyalkyl, or aminoalkyl
and
$R_2$, $R_3$, and $R_4$, are independently H, alkyl including branched or linear $C_1$ to $C_{20}$, preferably methyl, ethyl, propyl, or isopropyl, hydroxyalkyl or aminoalkyl.

A particularly suitable polyethyleneimine is represented by the following formula:

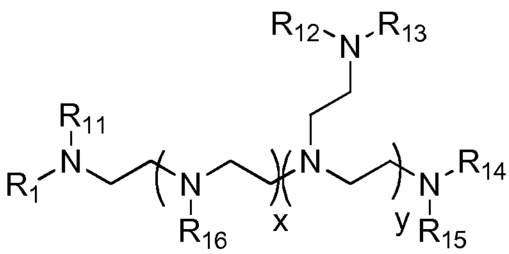

wherein $R_1$, $R_{11}$, $R_{12}$, $R_{13}$, $R_{14}$, $R_{15}$, and $R_{16}$ are independently H, alkyl, hydroxyalkyl, aminoalkyl, alkyl including branched or linear $C_1$ to $C_{20}$, preferably methyl, ethyl, propyl, or isopropyl, hydroxyalkyl or aminoalkyl
and x and y may independently equal to or greater than 1 and equal to or less than 4.

A preferred polyethyleneimine is represented by the following formula:

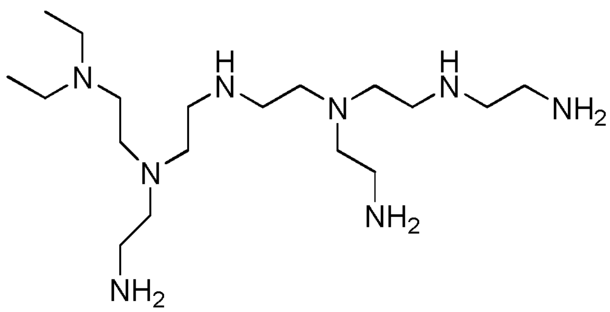

Borate compounds such as sodium tetraborate, potassium tetraborate, mixtures of sodium tetraborate and inorganic bases such as sodium hydroxide and potassium hydroxide, mixtures of potassium tetraborate and inorganic bases such as sodium hydroxide and potassium hydroxide are particularly useful bases because of their good thermal stability, see USP 4,758,367.

Phosphate compounds useful as bases for the present invention include potassium phosphate, sodium phosphate, trisodium phosphate (or potassium salt), and disodium phosphate (or potassium salt).

In one embodiment of the present invention, the base may be formed in-situ, for a description see USP 2,384,553. For example: the base component formed in situ by the addition of boric acid and potassium hydroxide or the base formed by the addition of phosphoric acid and potassium hydroxide.

A preferred embodiment of the present invention is a scale inhibition composition comprising one or more borate compound as part or all of base that will neutralize the polycarboxylic acid polymer. Scale inhibition compositions comprising a borate compound are expecting to display, in addition to higher thermal stability, protection against corrosion.

According to the embodiments, the scale inhibiting polymer compositions of the present invention may be used treat scale in any water system in which scale may be likely to form. Exemplary water systems, include, without limitation, cooling tower water systems (including open recirculating, closed and once-through systems); petroleum wells, downhole formations, geothermal wells and other oil field applications; boilers and boiler water systems; mineral process waters including mineral washing, flotation and benefaction; paper mill digesters, washers, bleach plants and white water systems; black liquor evaporators in the pulp industry; gas scrubbers and air washers; continuous casting processes in the metallurgical industry; air conditioning and refrigeration systems; industrial and petroleum process water; indirect contact cooling and heating water, such as pasteurization water; water reclamation and purification systems; membrane filtration water systems; food processing streams (meat, vegetable, sugar beets, sugar cane, grain, poultry, fruit and soybean); and waste treatment systems as well as in clarifiers, liquid-solid applications, municipal sewage treatment and industrial or municipal water systems.

A preferred embodiment of the present invention is a method for scale inhibition treatment of an oil or gas production well and/or subterranean formation. The scale inhibition composition of the present invention may be introduced by capillary injection and/or by a squeeze treatment.

Capillary injection of scale inhibitor can be carried out topside or downhole via chemical injection lines. Capillary injection at the wellhead or downhole may be needed in injector wells, especially for produced water reinjection, or in producing well streams. Capillary injection in the injector wells has also been carried out to prevent scaling in producing wells. Capillary injection into produced waters is usually carried out topside at the wellhead, where other production chemicals, such as corrosion inhibitors, may be

injected. In fact, many scale inhibitors are not compatible with certain corrosion inhibitors. Scale inhibitors can also be injected downhole if a capillary string is available or via the gas lift injection system. In gas lift injection, it is important to add a low-vapor-pressure solvent (vapor pressure depressant, VPD) such as a glycol to the aqueous scale inhibitor solution to avoid excessive solvent evaporation and "gunking" of the scale inhibitor. In addition, glycol or some other hydrate inhibitor may be needed to suppress gas hydrate formation. A scale dissolver blended with a scale inhibitor has also been deployed in a gas lift system.

For capillary injection applications, the concentration of polycarboxylic acid (co)polymer in the aqueous scale inhibitor composition of the present invention is equal to or greater than 1 weight percent, preferably equal to or greater than 5 weight percent, more preferably equal to or greater than 10 weight percent, more preferably equal to or greater than 15 weight percent, more preferably equal to or greater than 20 weight percent, and more preferably equal to or greater than 25 weight percent based on the total weight of the aqueous scale inhibitor composition. For capillary injection applications, the concentration of polycarboxylic acid (co)polymer in the aqueous scale inhibitor composition of the present invention is equal to or less than 90 weight percent, preferably equal to or less than 80 weight percent, more preferably equal to or less than 70 weight percent, more preferably equal to or less than 60 weight percent, more preferably equal to or less than 50 weight percent, more preferably equal to or less than 40 weight percent, more preferably equal to or less than 35 weight percent, and more preferably equal to or less than 30 weight percent based on the total weight of the aqueous scale inhibitor composition.

Downhole injection of some scale inhibitors can lead to increased downhole corrosion rates.

The basic idea in a scale inhibition squeeze treatment is to protect the well downhole from scale deposition and formation damage. The inhibitor will, of course, continue to work above the wellhead, protecting the pipeline from scaling, but a further dose of a scale inhibitor may be needed topside. In a squeeze treatment, a solution of the scale inhibitor is injected into the well above the formation pressure whereby the inhibitor solution will be pushed into the near-well formation rock pores. The well is then usually shut in for a period of hours to allow the inhibitor to e retained, by various mechanisms, in the rock matrix. When the well is put back on stream again, produced water will pass the pores where the chemical has been retained, dissolving some of it. In this way, the produced water should contain enough scale inhibitor to prevent scale deposition. When the concentration of the inhibitor falls below the MIC (minimum inhibitor concentration that prevents scale deposition), the well should be resqueezed. Naturally, long squeeze lifetimes will keep the overall downhole scale treatment costs to a minimum.

In one embodiment, the scale inhibiting polymer composition used in a squeeze application may be diluted in a carrier solvent (usually brine) and propagated out to an optimized radial distance into the oil producing formation, where it is retained and then released slowly back into the aqueous phase during normal well production. In one embodiment, the squeeze process generally includes applying a dilute solution of the scale inhibiting polymer with surfactant (0.1 weight percent) to clean and cool the near wellbore. Once cleaned, a high concentration solution of the scale inhibiting polymer at between 5 and 20 weight percent is introduced, followed by a low concentration solution of the scale inhibiting polymer. The solutions are left in contact with the reservoir for a period of time effective to allow for adsorption equilibration, after which the well is returned to production. Adhesion to the formation allows the scale inhibiting

polymer to remain within the near-wellbore area without being pumped up in the oil/water emulsion

Although squeeze application of the chemical is one of the most common method of treating downhole scale, the product could also be applied by other techniques commonly used offshore, which include gas-lift injection, downhole annulus injection, encapsulation or soluble matrix techniques, sub-sea wellhead injection via umbilical or indeed secondary topside treatments to enhance inhibitor performance as process conditions vary scaling tendency.

In a preferred embodiment, the scale inhibiting composition of the present invention is used in treating scale under high temperature and/or high pressure conditions, for example in oil or gas productions wells. The scale inhibiting compositions may be used to treat scale in conditions wherein the temperature is at least about 100°C or in the range of about 120°C to about 230°C. The scale inhibiting compositions also may be used to treat scale in conditions wherein the pressure is at least about 34 MPa (5,000 psi) or in the range of about 34 MPa (5,000 psi) to about 241 MPa (35,000 psi). In a particular embodiment, the scale inhibition treatment is at a temperature of about 120°C to about 230°C and a pressure of about 34 to 241 MPa (5,000 to 35,000 psi).

The scale inhibitor polymer and/or composition may be used in an amount effective to produce any necessary or desired effect. In one embodiment, an effective amount of the scale inhibitor composition of the embodiments may be dependent on one or more conditions present in the particular system to be treated and scale inhibiting moieties in the scale inhibiting polymer, as would be understood to one of skill in the art. The effective amount may be influenced, for example, by factors such as the area subject to deposition, temperature, water quantity, and the respective concentration in the water of the potential scale and deposit forming species.

For squeeze applications, the concentration of polycarboxylic acid (co)polymer in the aqueous scale inhibitor composition of the present invention is equal to or greater than 1 weight percent, preferably equal to or greater than 5 weight percent, more preferably equal to or greater than 10 weight percent, more preferably equal to or greater than 20 weight percent, and more preferably equal to or greater than 30 weight percent based on the total weight of the aqueous scale inhibitor composition. For squeeze applications, the concentration of polycarboxylic acid (co)polymer in the aqueous scale inhibitor composition of the present invention is equal to or less than 60 weight percent, preferably equal to or less than 50 weight percent, and more preferably equal to or less than 40 weight percent, based on the total weight of the aqueous scale inhibitor composition.

In one embodiment of the present invention, the aqueous scale inhibitor compositions of the present invention comprise 10 weight percent, more preferably 15, more preferably 16, more preferably 17, more preferably 18, more preferably 19, more preferably 20, more preferably 21, more preferably 22, more preferably 23, more preferably 24, more preferably 25, more preferably 26, more preferably 27, more preferably 28, more preferably 29, more preferably 30, more preferably 31, more preferably 32, more preferably 33, more preferably 34 or more preferably 35 weight percent of the polymer by weight of the total aqueous scale inhibitor composition.

According to various embodiments, the treatment composition according to the present disclosure will be effective when the scale inhibitor polymer is used at levels equal to or less than 500 parts per million (ppm). In some embodiments, the composition is effective at concentrations of at least 1 ppm, preferably from 1 ppm to 100 ppm; and in still other embodiments; the effective concentration is 1 to about 50 ppm. In certain embodiments, the effective concentration of the polymer is equal to or less than 10 ppm, preferably equal to or less than 20 ppm, more preferably equal to or less than 30 ppm, more preferably equal to or less than 40 ppm or even more preferably equal to or less than 50 ppm. In various embodiments, the treatment composition can be added directly into the desired aqueous system to be treated in a fixed quantity provided the pH is subsequently adjusted to neutralize the polymer as noted above or can be provided as an aqueous solution and added continuously or intermittently to the aqueous system as can be desired for some applications.

EXAMPLES

Aqueous solutions of scale inhibitor comprising a base (Example 1) and without base (Comparative Example A) are evaluated in a test brine solution for inhibition effectiveness. The evaluations are done for samples prepared under ambient conditions and for samples that have been aged under pressure at in a Parr reactor for five days at 120°C and 160°C. For each Comparative Example A and Example 1, five different samples comprising varying concentrations of the scale inhibitor are evaluated: 2, 4, 6, 10, and 20 parts per million (ppm) scale inhibitor. The scale inhibitor evaluated in Comparative Example A and Example 1 is a low molecular weight polymaleic acid (PMA) homopolymer having a weight average Mw of about 1,000 daltons available as ACCENT™ 1107T from The Dow Chemical Company.

Preparation of test brine solution.

The composition of the test brine solution for evaluating scale inhibition effectiveness for Comparative Example A and Example 1 is made up in accordance with to NACE TM0374 method and is a combination of a calcium-containing brine solution and a bicarbonate-containing brine solution. A 1,000 mL calcium-containing brine solution is prepared by

adding 12.15 g $CaCl_22H_20$, 3.68 g $MgCL_26H_2O$, and 33 g NaCl and dissolving to 1,000 mL with deionized water. A 1,000 mL bicarbonate-containing brine is prepared by adding 7.36 g NaHCO3 and 33 g NaCl and dissolving to 1,000 mL with deionized water. Prior to evaluating the scale inhibition effectiveness for Comparative Example A and Example 1 the test brine solution is prepared by combining in a 1:1 ratio the calcium-containing brine and the bicarbonate-containing brine stock solutions. Immediately prior to combining the brine solutions, each brine solution independently is saturated at room temperature with $CO_2$ gas by bubbling $CO_2$ gas through a fritted-glass dispersion tube at a rate of 250 mL for 30 minutes.

Preparation of non-aged scale inhibitor aqueous solutions.

For both Comparative Example A and Example 1, a1000 ppm aqueous stock solution of the scale inhibitor is made in a 250 mL plastic bottle using deionized water. The pH for Comparative Example A is 1.1. To Example 1, potassium hydroxide (KOH) is added until the pH is 5.

Preparation of aged scale inhibitor aqueous solutions.

For Comparative Example A, in a 500 mL stirred bottle, a sulfate-free sea water composition is used to make a 20 percent by weight solution of the scale inhibitor, the composition of the sulfate-free sea water is described in Table 1. The pH of Comparative Example A in the sulfate-free sea water is 1.1.

For Example 1, to a 500 mL stirred bottle, a 20 percent by weight solution of the scale inhibitor is prepared by adding the scale inhibitor, placing the bottle in an ice bath, adding KOH until the pH of the solution is 5, adding sulfate-free sea water to obtain a 20 weight percent solution of scale inhibitor, capping the bottle, and shaking.

Samples of Comparative Example A and Example 1 are placed in a Parr vessel equipped with a PTFE liner. Prior to sealing the vessels, nitrogen gas is bubbled through the solution for 30 minutes and then the solution is degassed under vacuum. Once degassed, the vessels are sealed and heated at 120°C and 160°C for five days. After five days, the vessels are removed from the Parr reactor and allowed to cool to ambient temperature for 24 hours.

Table 1

| Ion | Ion in solution (ppm) | Salt | Mass of salt (g) in 1 L deionized water |
|---|---|---|---|
| Na | 10890.00 | NaCl | 27.682 |
| K | 460.00 | KCl | 0.877 |
| Mg | 1368.00 | $MgCl_26H_2O$ | 11.443 |
| Ca | 428.00 | $CaCl_22H_2O$ | 1.570 |
| Ba | 0.00 | $BaCl_22H_2O$ | 0.000 |
| Sr | 0.00 | $SrCl_26H_2O$ | 0.000 |
| | | | |
| $SO_4$ | 0.00 | $Na_2SO_4$ | 0.000 |
| Cl | 21957.00 | | |
| | | Total Mass | 41.572 |

Scale inhibitor sample preparation for scale inhibition evaluation.

Into a 125 mL glass bottle is added 50 mL of each $CO_2$ saturated calcium-containing; brine and the bicarbonate-containing brine stock solutions. To the 100 mL test brine solution is added the appropriate amount from the non-aged 1,000 ppm stock solutions or the 120°C aged 20 percent solutions or the 160°C aged 20 percent solutions of Comparative Example A and Example 1 to provide non-aged, 120°C aged, and 160°C aged brine solutions comprising scale inhibitor at 2, 4, 6, 10, and 20 ppm. After addition of the scale inhibitor the bottles are sealed with septa caps and immediately agitated to mix the contents. Duplicate test solutions are prepared for each sample. A blank solution of brine (50 mL of each $CO_2$ saturated brine solution) with no scale inhibitor is also prepared, sealed, and agitated. The test bottles are placed in an oven at about 71 °C for 24 hours. Then removed and cooled to ambient temperature for a time not to exceed two hours.

Inductively Coupled Plasma (ICP) testing.

Scale inhibition is determined by ICP using a JY 2 ICP ULTIMA™ 2 from Horiba. The following procedure is followed to prepare the samples for ICP analysis:

- add approximately 1 g of inhibitor solution via a filtered syringe into a 50 mL ICP vial,
- dilute the sample to approximately 40 g with a solution of 0.25 N HCl,
- add approximately 0.5 g of the calcium-containing brine stock solution (non-heated with no $CO_2$ bubbling) to 40 g with 0.25 N HCl for use as blank reference samples,
- cap each ICP vial and mix the contents well,
- record the weights of each sample,
  and
- determine calcium ion concentration.

A calcium ion concentration calibration curve is prepared from control samples with known concentrations of calcium and other ions present in the brines. The standards are prepared by selecting the inorganic salts, weighing accurately the desired amounts, and dissolving them with deionized water. Each standard is filtered prior to use employing Whatman filter paper. The compositions of the standards are shown in Table 2.

Table 2

| Salt | Ion | Standard #1, ppm | Standard #2, ppm | Standard #3, ppm | Standard #4, ppm | Standard #5, ppm |
|---|---|---|---|---|---|---|
| $CaCl_2 2H_2O$ | Calcium | 400 | 800 | 1200 | 1600 | 2000 |
| $MgCl_2 6H_2O$ | Magnesium | 220 | 220 | 220 | 220 | 220 |
| NaCl | Sodium | 14000 | 14000 | 14000 | 14000 | 14000 |

The calcium ion concentration for each sample is determined by ICP. According to the NACE TM0374 method calcium ion concentration values for duplicate samples often differ by 2 percent or more. A 5 percent difference in calcium ion concentration is considered unacceptable and this result is discarded and the test repeated.

Percent Inhibition is calculated according to the following formula:

$$\%\ \text{Inhibition} = \frac{[\text{Ca Sample}] - [\text{Ca “0 ppm”}]}{[\text{Ca Blank}]/2 - [\text{Ca “0 ppm”}]}$$

wherein:

[Ca Sample] = calcium ion concentration in the sample comprising scale inhibitor after precipitation,

[Ca "0 ppm"] = calcium ion concentration in the blank without scale inhibitor after precipitation, and

[Ca Blank] = calcium ion concentration in the blank without scale inhibitor before precipitation.

The scale inhibition (% Inhibition) results for aged and non-aged Comparative Example A and Example 1 are shown in Table 3.

Table 3

| | % Inhibition | | | | |
|---|---|---|---|---|---|
| Scale Inhibitor | 2 ppm | 4ppm | 6ppm | 10ppm | 20ppm |
| Com Ex A | | | | | |
| not aged | 78 | 85 | 92 | 90 | 89 |

(continued)

| | % Inhibition | | | | |
|---|---|---|---|---|---|
| Scale Inhibitor | 2 ppm | 4ppm | 6ppm | 10ppm | 20ppm |
| aged 120°C | 27 | 46 | 59 | 80 | 88 |
| aged 160°C | 3 | 10 | 17 | 25 | 34 |
| Ex 1 | | | | | |
| not aged | 90 | 95 | 95 | 94 | 92 |
| aged 120°C | 67 | 89 | 88 | 95 | 88 |
| aged 160°C | 7 | 16 | 25 | 40 | 64 |

**Claims**

1. A method for scale inhibition treatment of an oil and gas production well or subterranean formation comprising introducing an aqueous scale inhibiting composition into the oil and gas production well or subterranean formation wherein the aqueous scale inhibiting composition comprises:

   i) a polycarboxylic acid (co)polymer not containing a sulfuric acid group and/or a sulfonate group and
   ii) one or more base such that the pH of the aqueous scale inhibiting composition is equal to or greater than 5 and equal to or less than 10,

   wherein the polycarboxylic acid (co)polymer is a homopolymer of maleic acid.

2. The method of Claim 1 wherein the polycarboxylic acid (co)polymer has a weight average molecular weight of from 900 to 1,000 daltons.

3. The method of Claim 1 or Claim 2 wherein the one or more base is selected from an inorganic base, an amine, an ammonium compound, a sterically hindered secondary aminoether alcohol, a phosphate compound, or a borate compound.

4. The method of Claim 1 or Claim 2 wherein the base is piperazine or derivative thereof, piperidine or derivative thereof, imidazole or derivative thereof, or a borate or derivative thereof.

5. The method of Claims 1 or Claim 2 wherein the base is potassium hydroxide, lithium hydroxide, or sodium hydroxide.

6. The method of any one of Claims 1-5 wherein the aqueous scale inhibiting composition is introduced by a squeeze treatment.

7. The method of any one of Claims 1-5 wherein the aqueous scale inhibiting composition is introduced by a capillary injection treatment.

**Patentansprüche**

1. Ein Verfahren zur Ablagerungsinhibierungsbehandlung einer Öl- und Gasförderbohrung oder einer unterirdischen Formation, beinhaltend das Einleiten einer wässrigen Ablagerungsinhibierzusammensetzung in die Öl- und Gasförderbohrung oder die unterirdische Formation, wobei die wässrige Ablagerungsinhibierzusammensetzung Folgendes beinhaltet:

   i) ein Polycarbonsäure(co)polymer, das keine Schwefelsäuregruppe und/oder Sulfonatgruppe enthält,

   und

ii) eine oder mehrere Basen, sodass der pH-Wert der wässrigen Ablagerungsinhibierzusammensetzung gleich oder größer als 5 und gleich oder kleiner als 10 ist,

wobei das Polycarbonsäure(co)polymer ein Homopolymer von Maleinsäure ist.

**2.** Verfahren gemäß Anspruch 1, wobei das Polycarbonsäure(co)polymer ein Molekulargewicht im Gewichtsmittel von 900 bis 1000 Dalton aufweist.

**3.** Verfahren gemäß Anspruch 1 oder Anspruch 2, wobei die eine oder die mehreren Basen aus einer anorganischen Base, einem Amin, einer Ammoniumverbindung, einem sterisch gehinderten sekundären Aminoetheralkohol, einer Phosphatverbindung oder einer Boratverbindung ausgewählt sind.

**4.** Verfahren gemäß Anspruch 1 oder Anspruch 2, wobei die Base Piperazin oder ein Derivat davon, Piperidin oder ein Derivat davon, Imidazol oder ein Derivat davon oder ein Borat oder ein Derivat davon ist.

**5.** Verfahren gemäß Anspruch 1 oder Anspruch 2, wobei die Base Kaliumhydroxid, Lithiumhydroxid oder Natriumhydroxid ist.

**6.** Verfahren gemäß einem der Ansprüche 1-5, wobei die wässrige Ablagerungsinhibierzusammensetzung durch eine Einpressbehandlung eingeleitet wird.

**7.** Verfahren gemäß einem der Ansprüche 1-5, wobei die wässrige Ablagerungsinhibierzusammensetzung durch eine Kapillareinspritzbehandlung eingeleitet wird.

## Revendications

**1.** Une méthode pour un traitement destiné à l'inhibition de la formation de tartre d'un puits de production pétrolière et gazière ou d'une formation souterraine comprenant l'introduction d'une composition aqueuse inhibant la formation de tartre dans le puits de production pétrolière et gazière ou la formation souterraine dans laquelle la composition aqueuse inhibant la formation de tartre comprend :

i) un (co)polymère d'acide polycarboxylique ne contenant pas un groupe acide sulfurique et/ou un groupe sulfonate

et

ii) une ou plusieurs bases de telle sorte que le pH de la composition aqueuse inhibant la formation de tartre soit égal ou supérieur à 5 et égal ou inférieur à 10,

dans laquelle le (co)polymère d'acide polycarboxylique est un homopolymère d'acide maléique.

**2.** La méthode de la revendication 1 dans laquelle le (co)polymère d'acide polycarboxylique a une masse moléculaire moyenne en poids allant de 900 à 1 000 daltons.

**3.** La méthode de la revendication 1 ou de la revendication 2 dans laquelle les une ou plusieurs bases sont sélectionnées parmi une base inorganique, une amine, un composé ammonium, un aminoétheralcool secondaire stériquement encombré, un composé phosphate, ou un composé borate.

**4.** La méthode de la revendication 1 ou de la revendication 2 dans laquelle la base est la pipérazine ou un dérivé de celle-ci, la pipéridine ou un dérivé de celle-ci, l'imidazole ou un dérivé de celui-ci, ou un borate ou un dérivé de celui-ci.

**5.** La méthode de la revendication 1 ou de la revendication 2 dans laquelle la base est l'hydroxyde de potassium, l'hydroxyde de lithium, ou l'hydroxyde de sodium.

**6.** La méthode de n'importe laquelle des revendications 1 à 5 dans laquelle la composition aqueuse inhibant la formation de tartre est introduite par un traitement par compression.

**7.** La méthode de n'importe laquelle des revendications 1 à 5 dans laquelle la composition aqueuse inhibant la formation de tartre est introduite par un traitement par injection capillaire.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- US 5294686 A
- US 6001940 A
- US 4758367 A
- US 2384553 A


### Non-patent literature cited in the description


- **FARRELL L. SIEGA.** Calcite Scale Inhibition: The case of Mahanagdong wells in Leyte geothermal production field, Philippines. *Proceedings World Geothermal Congress 2005,* 01 January 2005